# EUROPEAN PATENT APPLICATION

(11) **EP 4 501 843 A1**
(43) Date of publication of application: **05.02.2025**
(21) Application number: 23781272.2
(22) Date of filing: 27.03.2023
(51) Int. Cl.: C01B 17/26, C01B 17/28, C01B 17/36, C01B 17/38, C01B 17/40

(54) **METHOD FOR PRODUCING HIGH-PURITY ALKALI METAL SULFIDE**

(30) Priority: 31.03.2022 KR 20220040579; 23.03.2023 KR 20230038260
(71) Applicant: Solivis Inc., Seoul 04763 (KR)
(72) Inventor: SHIN, Dong Wook, Seongnam-si, Gyeonggi-do 13559 (KR); LEE, Young Min, Seoul 01362 (KR); PARK, Sang Ho, Uijeongbu-si, Gyeonggi-do 11698 (KR); KIM, Sung Jae, Namyangju-si, Gyeonggi-do 12109 (KR)
(74) Representative: HGF
(86) International application number: PCT/KR2023/004035
(87) International publication number: WO 2023/191417

(57) **Abstract**

One embodiment of the present disclosure includes a method of producing high-purity alkali metal sulfide including mixing an alkali metal sulfide salt precursor and a reducing agent to form a mixture, reducing the mixture to obtain alkali metal sulfide; and purifying the obtained alkali metal sulfide.

## Description

### Technical Field

The present disclosure relates to a method of producing high-purity alkali metal sulfide.

### Background Art

As a method of producing lithium sulfide, which is an example of an alkali metal sulfide, a chemical reaction using Li₂CO₃ and H₂S is widely used to synthesize Li₂S. In this case, however, there is a need for an additional storage device for H₂S gas, which is a toxic substance, and an exhaust facility for control purposes. Additionally, unreacted H₂S need to be completely burnt using a burner, etc., followed by neutralizing using a sodium hydroxide solution and treating the same with sodium sulfide.

In addition, this method is less productive because, for Li₂S synthesis, facilities and processes for handling of H₂S gas are required. Also, during mass production of Li₂S, a larger amount of H₂S is used. Accordingly, in addition to the basic material costs for the synthesis process, additional costs incur including costs for setting up and maintaining equipment to maintain stability. Thus, this method may be less economical in terms of mass production.

Lithium hydroxide (LiOH), which is used as a raw material in another conventional lithium sulfide production method, is more expensive than Li₂SO₄ (Lithium sulfate). In the case of this technology, the synthesis is carried out through a dry ball milling process, and thus, this process is simple compared to other methods. However, when produced in large volumes, economic feasibility may be decreased due to the cost of basic raw materials. Additionally, the purity of the powder synthesized through the milling process is relatively low, and thus, an additional high purification process is required.

Accordingly, there is a need for an economical method of producing high-purity alkali metal sulfides.

### Detailed Description of the disclosure

### Technical Problem

The problem to be solved by the present disclosure is to provide an economical and new method of producing high-purity alkali metal sulfide.

### Technical Solution to Problem

One embodiment of the present disclosure includes a method of producing high-purity alkali metal sulfide including mixing an alkali metal sulfide salt precursor with a reducing agent to form a mixture, reducing the mixture to obtain alkali metal sulfide; and purifying the obtained alkali metal sulfide.

### Advantageous Effects of Disclosure

According to the present disclosure, high-purity alkali metal sulfides can be produced economically.

### Brief Description of Drawings

FIG. 1 is a flowchart showing a method of producing high-purity alkali metal sulfide according to an embodiment of the present disclosure.
FIG. 2 is a graph showing the results of Raman spectroscopy analysis of lithium sulfide after a purification process.
FIG. 3 is a graph showing the results of Raman spectroscopy analysis of lithium sulfide before a purification process.
FIG. 4 is a graph showing the results of x-ray diffraction spectroscopy (XRD) in which lithium sulfide prepared according to an embodiment is compared with commercially available lithium sulfide.
FIG. 5 is a graph showing the results obtained by comparing the full width at half maximum of lithium sulfide prepared according to an embodiment with that of commercially available lithium sulfide.
FIG. 6 is a graph showing the results of confirming the peak of lithium sulfide reduced according to heat treatment temperature when manufacturing lithium sulfide according to an embodiment.
FIG. 7 is a graph showing the change in Gibbs free energy according to heat treatment temperature and carbon input amount when producing lithium sulfide according to an embodiment.
FIG. 8 is a graph showing the peak of lithium sulfide reduced according to carbon input amount when manufacturing lithium sulfide according to an embodiment.
FIG. 9 shows an image of lithium sulfide separated from impurities after a purification process by centrifugation and an image of lithium sulfide finally obtained after the impurities are removed, when producing lithium sulfide according to an embodiment.

### Best Mode

One embodiment of the present disclosure includes a method of producing high-purity alkali metal sulfide including mixing an alkali metal sulfide salt precursor and a reducing agent to form a mixture, reducing the mixture to obtain alkali metal sulfide; and purifying the obtained alkali metal sulfide.

In the present embodiment, in the mixing, the mixture may be formed in a non-polar solvent.

In the present embodiment, in the reducing, the mixture may be reduced using a reducing gas.

In the present embodiment, the reducing gas may include hydrogen and at least one selected from the group consisting of carbon monoxide, nitrogen, argon, helium, neon, methane, ethane, propane, and butane.

In the present embodiment, the reducing may include a heat treatment.

In the present embodiment, the heat treatment may be performed at 800 °C to 1500 °C.

In the present embodiment, in the purifying, the alkali metal sulfide obtained using a polar solvent may be purified.

In the present embodiment, the polarity index of the polar solvent may be 4.3 to 6.2.

In the present embodiment, in the purifying, the obtained alkali metal sulfide may be dissolved in the polar solvent.

In the present embodiment, after the purifying, crystallizing the alkali metal sulfide may be further performed.

In the present embodiment, the crystallizing may be performed by heat treatment at 300 °C to 1000 °C.

### Mode of Disclosure

The above objects, other objects, features and advantages of the present disclosure will be easily understood through the following preferred embodiments related to the attached drawings. However, the present disclosure is not limited to the embodiments described herein and may be embodied in other forms. Rather, the embodiments introduced herein are provided so that the disclosed content would be thorough and complete and the concept of the present disclosure can be sufficiently conveyed to those skilled in the art.

While describing each drawing, similar reference numerals are used for similar components. In the attached drawings, the dimensions of the structures are enlarged from the actual size for clarity of the present disclosure. Terms such as first, second, etc. may be used to describe various components, but the components should not be limited by the terms. These terms are used only for the purpose of distinguishing one component from another. For example, a first component may be named a second component, and similarly, a second component may also be named a first component without departing from the scope of the present disclosure. Singular expressions include plural expressions unless the context clearly dictates otherwise.

The terms such as "comprise or include" or "have" are intended to designate the presence of a feature, a number, a process, a component, a part, or a combination thereof described in the specification, and does not exclude in advance the possibility of the existence or addition of one or more other features, numbers, processes, parts, or combinations thereof. Additionally, the case where a layer, a film, a region, a plate, etc. is described to be "on" another part, film, region, plate, etc. includes not only a case where a layer, a film, a region, a plate, etc. is "directly on" another layer, film, region, plate, etc. but also a case where there is another layer, film, region, plate, etc. in between. On the other hand, the case where a layer, a film, a region, a plate, etc. is described to be "under" another part, film, region, plate, etc. includes not only a case where a layer, a film, a region, a plate, etc. is "directly under" another layer, film, region, plate, etc., but also a case where there is another layer, film, region, plate, etc. in between.

Unless otherwise specified, all numbers, values, and/or expressions used herein expressing quantities of components, reaction conditions, polymer compositions, and combinations are approximations reflecting the various uncertainties of measurement that inherently occurs in obtaining such values, among other things. Accordingly, it should be understood in all cases as being qualified by the term "approximately." Additionally, in a case where numerical ranges are disclosed herein, such ranges are continuous and, unless otherwise indicated, include all values from the minimum to the maximum of such range inclusively. Furthermore, when such a range refers to an integer, all integers from the minimum value up to and including the maximum value are included, unless otherwise indicated.

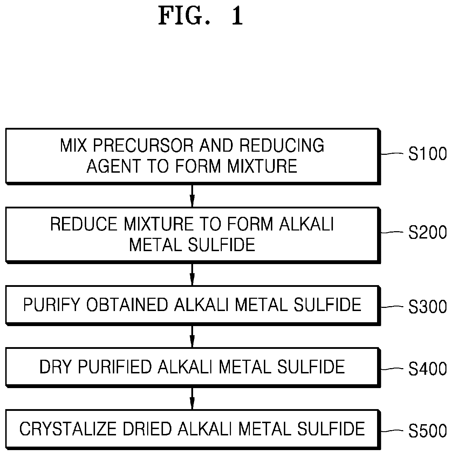

FIG. 1 is a flowchart showing a method of producing high-purity alkali metal sulfide according to an embodiment of the present disclosure.

Referring to FIG. 1, the method of producing high-purity alkali metal sulfide according to the present embodiment includes mixing a precursor and a reducing agent to form a mixture (S100), reducing the mixture to obtain an alkali metal sulfide (S200), and purifying the obtained alkali metal sulfide (S300), drying the purified alkali metal sulfide (S400), and crystallizing the dried alkali metal sulfide (S500).

The precursor may be a compound containing an alkali element and a sulfur element. For example, the precursor may be lithium sulfate, sodium sulfate, potassium sulfate, etc. These compounds may be hydrates or anhydrides.

The reducing agent may include carbon. The reducing agent is a carbon-based reducing agent, and is not particularly limited, and may have a gas phase, a liquid phase, or a solid phase. Additionally, the reducing agent may contain non-carbon atoms as long as being able to be provided as a source of carbon.

Such a reducing agent may include at least one of solid carbonaceous materials such as coal, coke, graphite, carbon black, fullerene, carbon tube, charcoal, carbide, elemental carbon, and an allotrope thereof. A representative example of elemental carbon and the allotrope thereof is graphite. In some embodiments, the reducing agent may be a metal-based reducing agent such as LiBH₄.

On the other hand, when the content of the reducing agent is too small, the reduction efficiency decreases, but when the content of the reducing agent is too large, too much impurities may be generated and manufacturing efficiency may be reduced. Therefore, the precursor and reducing agent may be mixed at a mole ratio of about 1:1 to about 1:5. For example, mixing may be performed at a molar ratio of 1:1 to 1:5, 1:1 to 1:4, 1:2 to 1:4, 1:3 to 1:6, or 1:3 to 1:5.

**The** precursor and the reducing agent may be uniformly mixed to form a mixture (S100).

Mixing the precursor with the reducing agent may be performed using milling, stirring, homogenizer, ultrasound, etc. **In** some embodiments, mixing of the precursor with the reducing agent may be performed by a milling process. **The** milling process may include ball mill, attrition mill, vibration mill, disk mill, jet mill, rotor mill, and pearl mill, and combinations thereof.

When mixing the precursor with the reducing agent, a solvent may be further included. The solvent is not necessarily included and may be omitted when mixing the precursor with the reducing agent.

The solvent used when mixing the precursor with the reducing agent may be a non-polar solvent. The non-polar solvent may be, for example, selected from the group consisting of cyclohexane, hexane, n-heptane, and combinations thereof.

Meanwhile, when a solvent is used when mixing the precursor with the reducing agent, drying may be further performed to remove the solvent. Drying may be performed by various methods such as vacuum drying, hot air drying, freeze drying, and spray drying.

After forming the mixture, the mixture may be reduced to obtain an alkali metal sulfide (S200).

When reducing the mixture, a reducing gas may be supplied. The reducing gas may include hydrogen. In some embodiments, the reducing gas may be hydrogen. Additionally, the reducing gas may be a mixture of hydrogen with at least one selected from the group consisting of carbon monoxide, nitrogen, argon, helium, neon, methane, ethane, propane, and butane. As described above, in the case where the mixture is reduced, when a reducing gas containing hydrogen is supplied, the reduction effect by the reducing agent containing carbon may be further improved.

In some embodiments, reduction may be performed together with heat treatment. The heat treatment temperature may be about 700 °C to about 900 °C. Additionally, the heat treatment time may be from about 1 hour to about 24 hours.

The purifying the obtained alkali metal sulfide (S300) may be a process for removing the reducing agent and unreacted precursor which are mixed with the obtained alkali metal sulfide, in which the obtained alkali metal sulfide is mixed with an organic solvent, and only the purified solvent is extracted.

The solvent used during purification may be a polar solvent. The polar solvent may specifically have a polarity index between 4.3 and 6.2. The polar solvent may be, for example, ethanol. In such a solvent, only the obtained alkali metal sulfide dissolves, and the remaining impurities settle, so that the alkali metal sulfide and impurities may be easily separated, and high-purity alkali metal sulfide may be obtained.

The purifying process may include centrifuging. The centrifuging may be performed at about 1000 rpm to about 5000 rpm for about 5 minutes to about 60 minutes. In some embodiments, for example, the centrifuging may be performed at 1000 rpm to 4000 rpm, 1000 rpm to 3000 rpm, 2000 rpm to 5000 rpm, 2000 rpm to 4000 rpm, 2000 rpm to 3000 rpm, 3000 rpm to 5000 rpm, or 3000 rpm to 4000 rpm, for 5 minutes to 50 minutes, 5 minutes to 40 minutes, 5 minutes to 30 minutes, 10 minutes to 60 minutes, 10 minutes to 50 minutes, 10 minutes to 40 minutes, 10 minutes to 30 minutes, 20 minutes to 60 minutes, 20 minutes to 50 minutes, 20 minutes to 40 minutes, 30 minutes to 60 minutes, or 30 minutes to 50 minutes.

In some embodiments, obtained alkali metal sulfide may be separated from impurities by various methods such as filtering, dehydration, and filter pressing.

Next, the solvent in which the purified alkali metal sulfide is dissolved can be separated, dried (S400), and heat treated to crystallize the alkali metal sulfide (S500).

Drying may be done by vacuum drying, hot air drying, freeze drying, spray drying, etc., and the solvent may be removed thereby.

The alkali metal sulfide from which the solvent has been removed may be crystallized by heat treatment. In this regard, the heat treatment temperature may be 300 °C to 930 °C. Meanwhile, during heat treatment for crystallization, the purity of alkali metal sulfide may be further improved by supplying at least one reducing gas from the group consisting of carbon monoxide, nitrogen, hydrogen, argon, helium, neon, methane, ethane, propane, and butane.

Meanwhile, a preliminary crystallizing may be further included between the drying (S400) and the crystallizing (S500). The preliminary crystallizing is to proactively crystallize the alkali metal sulfide before the crystallizing (S500). When the crystallizing (S500) is performed after the preliminary crystallization (S500), fully crystalline alkali metal sulfide required for lithium-sulfur batteries, etc. may be produced.

However, when alkali metal sulfide is used as a raw material for synthesis, such as a solid electrolyte, a preliminary crystallization may not be performed because excellent reactivity is required. In other words, by making the alkali metal sulfide have relatively low crystallinity, chemical reactions such as decomposition may be improved.

The production of alkali metal sulfide according to an embodiment of the present disclosure as described above may be performed in a glove box or dry room that is not exposed to moisture and oxygen.

Hereinafter, the configurations and operations of the present disclosure will be described in more detail through preferred embodiments of the present disclosure. However, this is presented as a preferred example of the present disclosure and should not be construed as limiting the present disclosure in any manner.

### Example 1. Manufacture of alkali metal sulfide (lithium sulfide)

Li₂SO₄ and carbon were mixed at a molar ratio of 1:4 through milling in the solvent heptane. The mixed mixture was heat treated at 800 °C for 12 hours in an atmosphere including 3% hydrogen and argon (Ar) gas to synthesize Li₂S.

The synthesized Li₂S was dissolved in ethanol solvent (Polarity index=5.2) and then centrifuged at 3000 RPM for 30 minutes. Accordingly, impurities other than Li₂S dissolved in ethanol settled to allow only Li₂S dissolved in ethanol to be separated.

The ethanol solvent in which Li₂S was dissolved was separated and extracted, dried under vacuum, and then heat-treated at 600 °C for 5 hours. Accordingly, the solvent ethanol component was evaporated and high-purity Li₂S was obtained.

### Experimental Example 1. Raman spectroscopy and X-ray diffraction (XRD) spectroscopy analysis

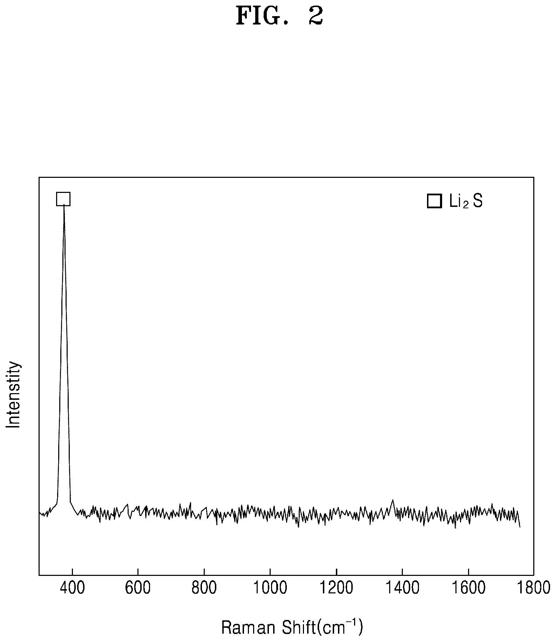

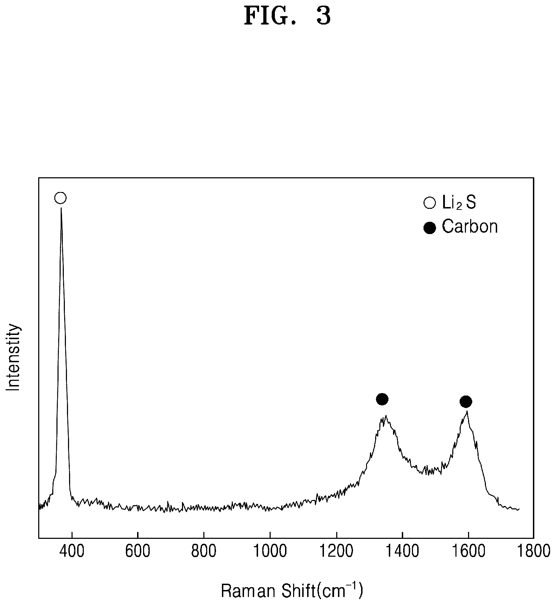

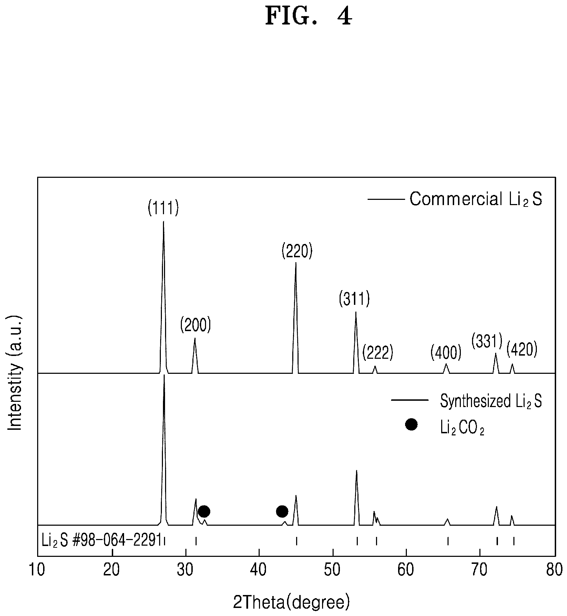

FIG. 2 is a graph showing the results of Raman spectroscopy analysis of lithium sulfide after a purification process, and FIG. 3 is a graph showing the results of Raman spectroscopy analysis of lithium sulfide before a purification process. FIG. 4 is a graph showing the results of XRD spectroscopy in which lithium sulfide prepared according to an embodiment is compared with commercially available lithium sulfide.

As a result of confirming the lithium sulfide prepared in Example 1 through Raman spectroscopic analysis, the main bond in the sample after the purification process was confirmed to be Li₂S, as shown in FIG. 2. On the other hand, when Raman spectroscopic analysis was performed on the sample before the purification process, it was confirmed that Li₂S and carbon were mixed, as shown in FIG. 3. That is, according to the present disclosure, it can be seen that impurities in the sample were removed through the purification process.

In addition, when the main XRD peaks of the lithium sulfide manufactured in Example 1 were confirmed, as shown in FIG. 4, the peaks were identical to those of commercially available Li₂S. Accordingly, it can be seen that the purification process of Example 1 was effective.

### Experimental example 2. Size analysis

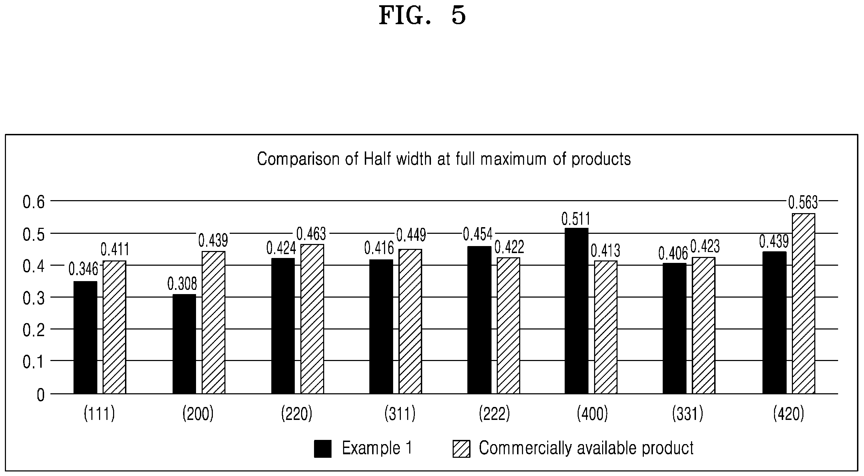

FIG. 5 is a graph showing the results obtained by comparing the full width at half maximum of lithium sulfide prepared according to an embodiment with commercially available lithium sulfide.

Additionally, from the XRD peak of the lithium sulfide manufactured in Example 1, as shown in FIG. 5, it can be seen that the average full width at half maximum was about 92% of that of the peak shape of commercially available lithium sulfide, showing excellent characteristics in terms of crystallinity.

In addition, when measuring the particle size of the powder, as shown in Table 1 below, the lithium sulfide prepared in Example 1 was an average size of about 22.8 nm, and the commercial product was an average size of about 19.4 nm. Therefore, it can be seen that the particles sizes are at equivalent levels.

**Table 1**

| Classification | Particle size (nm) |
|---|---|
| Lithium sulfide of Example 1 | 22.8 |
| Commercially available product | 19.4 |

### Experimental example 3. XRD and Ellingham diagram analysis according to heat treatment temperature and carbon ratio

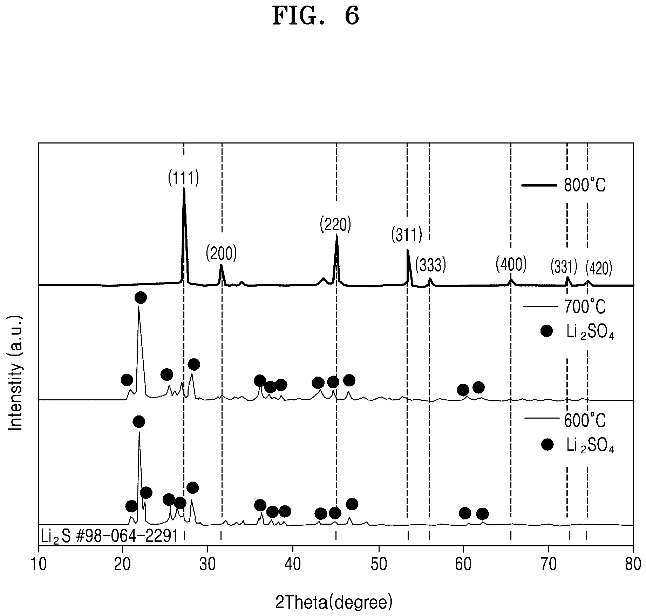

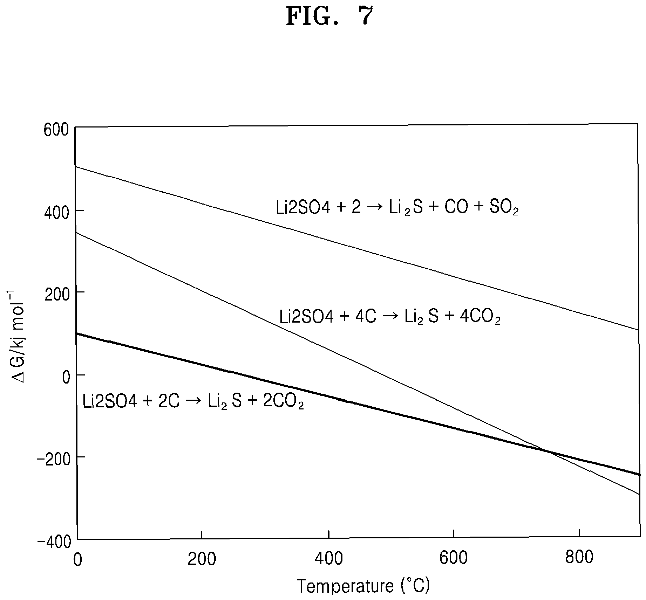

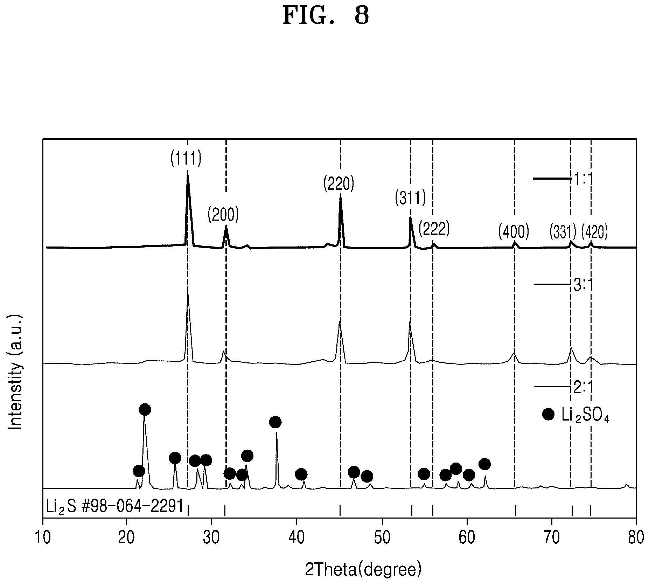

FIG. 6 is a graph showing the results of confirming the peak of lithium sulfide reduced according to heat treatment temperature when manufacturing lithium sulfide according to an embodiment, and FIG. 7 is a graph showing the change in Gibbs free energy according to heat treatment temperature and carbon input amount when producing lithium sulfide according to an embodiment. FIG. 8 is a graph showing the peak of lithium sulfide reduced according to carbon input amount when manufacturing lithium sulfide according to an embodiment.

During heat treatment during the synthesis of lithium sulfide as in Example 1, the XRD peak and Ellingham diagram were confirmed at each temperature. As shown in FIG. 6, it was confirmed that the peak of Li₂S obtained by reduction of Li₂SO₄ was clearly generated when the reaction temperature was 800°C.

In addition, from the Ellingham diagram, it was confirmed that as the heat treatment temperature and carbon input content were increased, as shown in FIG. 7, the amount of change in reduction of the Gibbs free energy was increased. When Li₂SO₄ and carbon were heat treated at a ratio of 1:4, a large change in Gibbs free energy of about -250 kJ/mol was confirmed at about 800 °C.

Additionally, as shown in FIG. 8, it was confirmed that the peak of lithium sulfide obtained by reduction of Li₂SO₄ was clearly visible as the content of carbon introduced was increased.

### Experimental example 4. Identification of lithium sulfide after purification and crystallization

As a result of purification using different solvents used in the purification process as in Example 1, it was found that lithium sulfide was dissolved in a solvent within a specific polarity range as shown in Table 2 below.

**Table 2**

| Solvent | Polarity | Li₂S soluble or not |
|---|---|---|
| Butanol | 3.9 | X |
| Isopropanol | 4.3 | X |
| Ethanol | 5.2 | O |
| ACN | 6.2 | X |

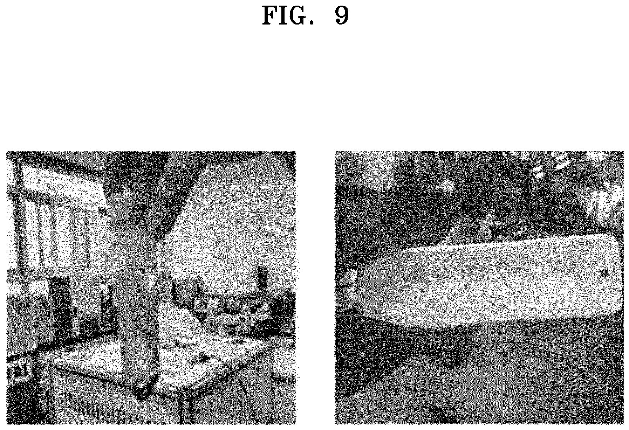

In addition, after the purification process using a centrifuge as in Example 1, it was confirmed that the lithium sulfide layer dissolved in the solvent was separated from the layer of impurities containing carbon, as shown in the left photo of FIG. 9. Afterwards, a filter was used to collect the solvent excluding impurities, which were precipitates, and vacuum drying and additional heat treatment were performed. As a result, as shown in the right photo of FIG. 9, a high-purity final product was identified. As such, it can be seen that the lithium sulfide prepared according to Example 1 has higher purity than lithium sulfide lithium sulfide produced by a conventional synthesis method.

As such, the present disclosure has been described with reference to one embodiment shown in the drawings, but this is merely exemplary, and those skilled in the art will understand that various modifications and variations of the embodiment are possible therefrom. Therefore, the true technical scope of protection of the present disclosure should be determined by the technical spirit of the appended claims.

## Claims

1. A method of producing high-purity alkali metal sulfide, comprising:
mixing an alkali metal sulfide salt precursor and a reducing agent to form a mixture;
reducing the mixture to obtain alkali metal sulfide; and
purifying the alkali metal sulfide which is obtained.

2. The method of producing high-purity alkali metal sulfide claim 1, wherein
in the mixing, the mixture is formed in a non-polar solvent.

3. The method of producing high-purity alkali metal sulfide of claim 1, wherein
in the reducing, the mixture is reduced by a reducing gas.

4. The method of producing high-purity alkali metal sulfide of claim 3, wherein
the reducing gas comprises hydrogen and at least one selected from the group consisting of carbon monoxide, nitrogen, argon, helium, neon, methane, ethane, propane, and butane.

5. The method of producing high-purity alkali metal sulfide of claim 1, wherein
the reducing comprises heat-treating.

6. The method of producing high-purity alkali metal sulfide of claim 5, wherein
the heat-treatment is performed at 800 °C to 1500 °C.

7. The method of producing high-purity alkali metal sulfide of claim 1, wherein
in the purifying, the alkali metal sulfide which is obtained is purified using a polar solvent.

8. The method of producing high-purity alkali metal sulfide of claim 7, wherein
a polarity index of the polar solvent is 4.3 to 6.2.

9. The method of producing high-purity alkali metal sulfide of claim 7, wherein
in the purifying , the alkali metal sulfide which is obtained is dissolved in the polar solvent.

10. The method of producing high-purity alkali metal sulfide of claim 1, further comprising
crystallizing the alkali metal sulfide after the purifying.

11. The method of producing high-purity alkali metal sulfide of claim 10, wherein
the crystallizing is performed by heat-treating at 300 °C to 1000 °C.
